# EUROPEAN PATENT SPECIFICATION

(11) **EP 3 869 445 B1**
(45) Date of publication and mention of the grant of the patent: **19.11.2025**
(21) Application number: 20305157.8
(22) Date of filing: 19.02.2020
(51) Int. Cl.: G06Q 50/18

(54) **COMPUTER SYSTEM AND METHOD FOR GENERATING AN IMPROVED AND CONSENSUAL DOCUMENT IN A MULTI-USER ENVIRONMENT**
COMPUTERSYSTEM UND VERFAHREN ZUR ERZEUGUNG EINES VERBESSERTEN UND KONSENSUELLEN DOKUMENTS IN EINER MEHRBENUTZERUMGEBUNG
SYSTÈME INFORMATIQUE ET PROCÉDÉ POUR GÉNÉRER UN DOCUMENT AMÉLIORÉ ET CONSENSUEL DANS UN ENVIRONNEMENT À UTILISATEURS MULTIPLES

(43) Date of publication of application: 25.08.2021
(73) Proprietor: ATOS FRANCE, 95870 Bezons (FR)
(72) Inventor: VERGE, Oscar, Brooklyn, New York 11217 (US); PONCE, Javier, Brooklyn, New York 11211 (US)
(74) Representative: Novagraaf Technologies

(56) References cited:
- EP-A1- 3 115 907
- WO-A1-2013/123182
- WO-A1-2016/191396
- US-A1- 2014 025 608
- US-A1- 2017 357 909
- US-A1- 2019 028 520
- US-A1- 2020 026 916
- US-B1- 7 827 125

## Description

### Field of the invention

The present invention relates to the field of data processing systems or methods, specially adapted for administrative and managerial purposes and particularly document generation. More particularly, the invention relates to a new method for providing a holistic view of a document, allowing simplified and informed document modification and decision making by executive management.

### Description of Related Art

In large organizations, considerable time is spent in preparing and administering agreements or contracts with other entities and individuals. Such documents can be lengthy and complex, as the parties to the agreement attempt to cover all possible scenarios to mitigate risks and avoid surprises. During the drafting phase, it is often useful to evaluate the contract according to one or more criteria, including according to key contractual principles which the organization follows.

It has been proposed a variety of pre-approved custom document templates, with clause libraries, and strategic workflows that make creating, distributing, and completing contracts faster. While reviewing negotiated clauses, users can access library content and related agreements, such as looking up master agreement clauses while reviewing a statement of work. However, contracts imply at least two parties and it may not be possible to impose a library clause. Hence, such solutions are not sufficient to allow rapid management of large corporate contracts.

It is often helpful to assign a relative risk level to an entire contract or a portion of a contract, and to use this risk level in making decisions. To minimize the chances of entering into contracts with high-risk terms, companies often have a contract review process that allows for a risk assessment to be made before each contract is executed. A company typically has a risk assessment team whose job it is to meet periodically and assess the risks associated with each contract. Before the risk assessment team meets, several reports may be manually generated by risk assessment analysts who try to point out the high-risk terms associated with each contract. The company may have a risk assessment analyst for each possible risk type. For example, a company may have both a financial risk assessment analyst whose job it is to identify whether the financial terms present a high risk and a choice of law risk assessment analyst whose job it is to identify whether the choice of law in a particular venue presents a high risk. The risk assessment analyst may also suggest ways in which the terms of the contract can be modified to reduce the risk. In some cases, multiple risk assessment analysts are required to approve a particular variation. If many contracts are involved, however, the tasks of analyzing, recording and tracking them are cumbersome and prone to error. Automatic solutions have been developed but there is still a need for the involvement of persons in charge of these contracts (US2014/0053069) and no attention was paid to the resolution of identified risks and the management of risk mitigation actions. Indeed, knowledge and/or authorities over the many areas affected by a contract are spread widely among many individuals and/or departments within an organization. These individuals and departments must have access to up-to-date information if their participation in the contract drafting process is to be as beneficial as possible.

However, there is still a need for a solution allowing a collaboration of a plurality of experts on the processing of a document in order to generate automatically an improved and validated document. US 2019/028520 A1 discloses a method and module to automation of certain fiduciary tasks using machine learning techniques, including generation of corporate meeting minute documents in compliance with legal and organizational requirements. The method uses pre-trained machine learning based data model. The module allows to monitor and proactively control meetings to ensure agenda completion among meeting participants and to create meeting minutes. Audio streams of a meeting are gathered by a module then keywords are identified to generate the minutes. Participants can then each edit and amend the document.

WO 2013/123182 discloses a method for the automation of legal document review and creation of summary document, either in training mode or classification mode. A preprocessor generates candidate items and associated features from input documents. Candidate items can be presented to a machine learning classifier, which classifies them as relevant or not relevant to a given legal category. It is aimed at extracting legal provisions of a contract which can be seen as a first structure, to generate a summary based on training and classification algorithms.

US2020/0026916 discloses systems and methods that utilize a predictive analysis model to analyze and review a document: one or more terms in the documents and corresponding terms in a repository are identified, determine a difference parameter between a first term extracted from the document and second term extracted from the repository and determine whether a difference represented by the difference parameter is acceptable and report a validation parameter indicating a level of acceptability associated with the difference parameter.

### Summary of the invention

The following sets forth a simplified summary of selected aspects, embodiments and examples of the present invention for the purpose of providing a basic understanding of the invention. However, the summary does not constitute an extensive overview of all the aspects, embodiments and examples of the invention. The sole purpose of the summary is to present selected aspects, embodiments and examples of the invention in a concise form as an introduction to the more detailed description of the aspects, embodiments and examples of the invention that follow the summary.

The invention aims to overcome the disadvantages of the prior art. In particular, the invention proposes a method for generating a document in a multi-user environment, said method using rule-based algorithms to convert a proposed document in an improved and consensual document. Advantageously, such a method based on machine learning techniques organizes the collaboration of several users.

The invention also proposes a computer system configured to generate a document in a multi-user environment.

Hence, according to **an aspect** of the present invention, it is provided **a computer system** according to claim 1 and a method according to claim 11.

This computer system provides a holistic view of discussion or risk or negotiation points contained in a document, allowing simplified and informed decision making by executive management.

This method also permits a document review with an analysis of a deviation gap between the document and a predetermined standard, proposition of subparts modifications and identification of points requiring mitigation action.

In particular, the invention comprises the determination and the generation of several data structures including document language subparts, contextual requirement elements and/or improvement elements for generating a document in a multi-user environment.

According to other optional features of the method:
- one or more hardware processors are further configured by machine readable instructions to generate a status value of the document based on binary answers and using machine learning or a rule-based algorithm. The generation of a status value improves the document review and classification.
- one or more hardware processors are further configured by machine readable instructions to send, through the network interface, risk mitigation elements to a client and receive modified risk mitigation elements. The modified risk mitigation elements, if validated, can be included in the improved and consensual document.
- one or more hardware processors are further configured by machine readable instructions to generate, based on the second data structure and using machine learning or a rule-based algorithm, a complementary data structure including guidance elements associated to contextual requirement elements. Guidance elements can be automatically generated based on the primary data structure and metadata of the document such as parties implicated, author(s) and/or date of creation.
- one or more hardware processors are furthermore configured by machine readable instructions to generate a progress bar illustrating a state of the document, said progress bar being updated by team members. The generation of a progress bar improves the document review and classification.
- one or more hardware processors are further configured by machine readable instructions to generate a graph illustrating the status values for a plurality of specialty areas of the document. Such a generation improves the document review and classification. It can also allow the system to identify clients or user IDs associated with experts in the identified specialty areas.
- one or more hardware processors are further configured by machine readable instructions to generate a list comprising deviations and preferably status of each deviation.
- one or more hardware processors are further configured by machine readable instructions to generate a document comporting specialty areas deviation and a weight for each specialty areas deviation, preferably said document also comprising the status of the mitigation elements
- one or more hardware processors are further configured by machine readable instructions to generate a pre-matching specialty areas for at least one subpart of the document, said pre-matching specialty areas being generated through plain text comparison and including a value of similarity.
- mitigation elements are proposed based on a supervised machine learning model trained at least partially with already treated documents.

According to **another aspect** of the present invention, it is provided a computer program comprising instructions stored in a data memory of a computer device for implementing a method according to the invention.

### Brief description of the drawings

The foregoing and other objects, features and advantages of the present invention will become more apparent from the following detailed description when taken in conjunction with the accompanying drawings in which:
FIG. 1 is a schematic view of a computer system according to an embodiment of the invention.
FIG. 2 is a schematic view of a process flow diagram of the method according to an embodiment of the invention.
FIG. 3 is a schematic view of a process flow diagram according to an embodiment of the invention.
FIG. 4 is a schematic view of a process flow diagram of a method according to another embodiment of the invention.

Several aspects of the present invention are disclosed with reference to flow diagrams and/or block diagrams of methods, devices and computer program products according to embodiments of the invention.

On the figures, the flow diagrams and/or block diagrams show the architecture, the functionality and possible implementation of devices or systems or methods and computer program products, according to several embodiments of the invention.

For this purpose, each box in the flow diagrams or block diagrams may represent a system, a device, a module or code, which comprises several executable instructions for implementing the specified logical function(s).

In some implementations, the functions associated with the box may appear in a different order than indicated in the figures.

For example, two boxes successively shown, may be executed substantially simultaneously, or boxes may sometimes be executed in the reverse order, depending on the functionality involved.

Each box of flow diagrams or block diagrams and combinations of boxes in flow diagrams or block diagrams, may be implemented by special systems that perform the specified functions or actions or perform combinations of special equipment and computer instructions.

### Detailed description

By **"process", "compute ", "determine", "display", "extract", "compare"** or more broadly **"executable operation"** is meant, within the meaning of the invention, an action performed by a computer device or a processor unless the context indicates otherwise. In this regard, the operations relate to actions and/or processes of a data processing system, for example a computer system or an electronic computing device, which manipulates and transforms the data represented as physical (electronic) quantities in the memories of the computer system or other devices for storing, transmitting or displaying information. In particular, calculation operations are carried out by the processor of the device, the produced data are entered in a corresponding field in a data memory and this field or these fields can be returned to a user for example through a Human Machine Interface formatting such data. These operations may be based on applications or software.

The terms or expressions **"application", "software", "program code",** and **"executable code"** mean any expression, code or notation, of a set of instructions intended to cause a data processing to perform a particular function directly or indirectly (for example after a conversion operation into another code). Exemplary program codes may include, but are not limited to, a subprogram, a function, an executable application, a source code, an object code, a library and/or any other sequence of instructions designed for being performed on a computer system.

By **"processor" "data processing apparatus" or "treatment module"** is meant, within the meaning of the invention, at least one hardware circuit configured to perform operations according to instructions contained in a code. The hardware circuit may be an integrated circuit. Examples of a processor include, but are not limited to, a central processing unit, a graphics processor, an application-specific integrated circuit (ASIC), and a programmable logic circuit. A single processor or several other units may be used to implement the invention. In some implementations, the data processing apparatus and/or special purpose logic circuitry may be hardware-based and/or software-based. The apparatus can optionally include code that creates an execution environment for computer programs, e.g., code that constitutes processor firmware, a protocol stack, a database management system, an operating system, or a combination of one or more of them. The present disclosure contemplates the use of data processing apparatuses with or without conventional operating systems, for example LINUX, UNIX, WINDOWS, MAC OS, ANDROID, IOS or any other suitable conventional operating system.

By **"coupled"** is meant, within the meaning of the invention, connected, directly or indirectly, with one or more intermediate elements. Two elements may be coupled mechanically, electrically or linked by a communication channel.

The expression **"human-machine interface",** within the meaning of the invention, corresponds to any element allowing a human being to communicate with a computer, in particular and without that list being exhaustive, a keyboard and means allowing in response to the commands entered on the keyboard to perform displays and optionally to select with the mouse or a touchpad items displayed on the screen. Another embodiment is a touch screen for selecting directly on the screen the elements touched by the finger or an object and optionally with the possibility of displaying a virtual keyboard.

By **"computer device",** it should be understood any device comprising a processing unit or a processor, for example in the form of a microcontroller cooperating with a data memory, possibly a program memory, said memories possibly being dissociated. The processing unit cooperates with said memories by means of internal communication bus.

It is desirable that documents be generated in a multiuser environment and shared across an entire organization as the capacity of mitigation and validation can be widespread. A consensual document is a compilation of the interactions between two or more parties that are required to realize a specific interface between the needs and insights of each party.

The present invention is intended as a unified way of setting up a process of document generation in a multiuser environment.

The invention includes a system and a method using rule-based algorithms to modify document language. Based on a first version of a document the invention will allow the generation of an improved and consensual document as described in detail hereafter. Advantageously such method and system will give a frame for human intervention and collaboration allowing a rapid reaching of consensus on identified critical parts of a document.

Hence according to a **first aspect,** the invention relates to a **computer system 1 for generating a document in a multi-user environment.** In particular, a computer system according to the invention is configured for using rule-based algorithms to, preferably automatically, convert a proposed document in an improved and consensual document. The invention will be described in detail according to the generation of one document. However, the invention and in particular the computer system 1 is suitable to generate a plurality of documents in a multi-user environment.

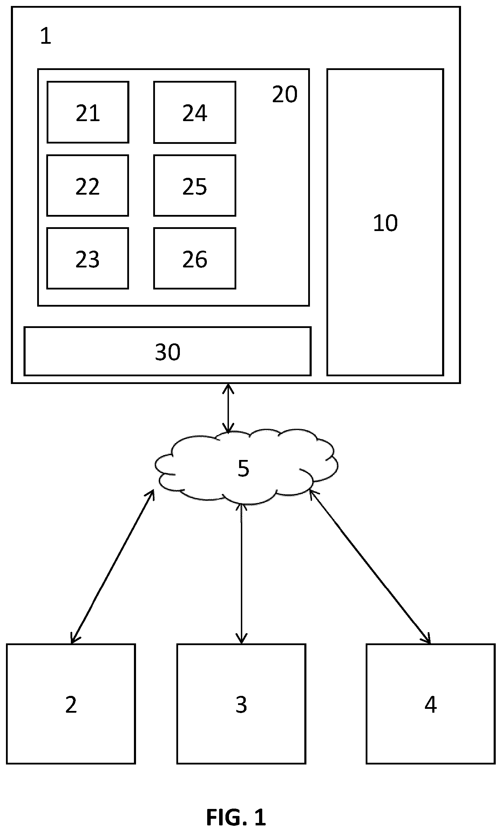

**Figure 1** is a block diagram illustrating an example computer system 1 for generating a document in a multi-user environment according to one implementation.

At a high level, the computer system 1 is an electronic computing device operable to receive, transmit, process, store, or manage data and information. According to some implementations, the computer system 1 may also include or be communicably coupled with an e-mail server, a web server, a caching server, a streaming data server, and/or another suitable server.

The illustrated example computer system 1 includes or is communicably coupled with one or more processors 10, a data memory 20, a network interface 30, and it communicates across a network 5 with a plurality of clients 2, 3,4.

The computer system 1 includes **one or more processors 10.** Although illustrated as a single processor 10 in FIG. 1, two or more processors may be used according to particular needs, desires, or particular implementations of the invention. Generally, the processor 10 executes instructions and manipulates data to perform the operations of the computer system 1. Specifically, the processor 10 is a data processing apparatus which is configured to execute the functionalities required to provide an improved and consensual document.

The one or more hardware processors 10 are configured by machine readable instructions, stored on a data memory 20 in communication with the one or more hardware processors 10.

Hence, the computer system 1 also includes a **data memory 20** that holds data for the computer system 1. Indeed, generally, a processor will receive instructions and data from a read-only memory (ROM) or a random-access memory (RAM) or both. Generally, a computer system 1 will also include, or be operatively coupled to, receive data from or transfer data to, or both, one or more mass storage devices for storing data, e.g., magnetic, magneto-optical disks, or optical disks. Computer-readable media (transitory or non-transitory, as appropriate), suitable for storing machine readable instructions and data, include all forms of non-volatile memory, media and memory devices, including by way of example semiconductor memory devices, erasable programmable read-only memory (EPROM), electrically-erasable programmable read-only memory (EEPROM), and flash memory devices; magnetic disks, e.g., internal hard disks or removable disks; magneto-optical disks; and CD-ROM, DVD+/-R, DVD-RAM, and DVD-ROM disks. The memory may store various objects or data, including caches, classes, frameworks, applications, backup data, jobs, web pages, web page templates, database tables, repositories storing business and/or dynamic information, and any other appropriate information including any parameters, variables, algorithms, instructions, rules, constraints, or references thereto. Additionally, the memory may include any other appropriate data, such as logs, policies, security or access data, reporting files, as well as others.

In particular, a data memory 20 according to the invention will comprise a keyword repository 21, a segmentation repository 22, and a key principles identifier repository 23, a key principles questions repository 24, a key principles example repository 25, and/or a key principles mitigation repository 26.

Although illustrated as a single memory 20 in FIG. 1, two or more memories may be used according to particular needs, desires, or particular implementations of the invention. While data memory 20 is illustrated as an integral component of the computer system 1, in alternative implementations, data memory 20 can be external to the computer system 1. In some implementations, the data memory 20, includes one or more instances of a document as described after.

The computer system 1 includes a **network interface 30.** Although illustrated as a single network interface 30 in FIG. 1, two or more network interfaces 30 may be used according to particular needs, desires, or particular implementations of the computer system 1. The network interface 30 is used by the computer system 1 for communicating with other systems in a distributed environment connected preferably to the network 5; for example, the client 2, 3, 4 as well as other systems communicably coupled to the network 5. Generally, the network interface 30 comprises logic encoded in software and/or hardware in a suitable combination and operable to communicate with the network 5. More specifically, the network interface 30 may comprise software supporting one or more communication protocols associated with communications such that the network 5 or interface's hardware is operable to communicate physical signals.

The computer system 1 can be connected to the client 2, 3, 4, by any form or medium of wireline and/or wireless digital data communication, e.g., a communication network. Examples of communication networks include a local area network (LAN), a radio access network (RAN), a metropolitan area network (MAN), a wide area network (WAN), Worldwide Interoperability for Microwave Access (WIMAX), a wireless local area network (WLAN) using, for example, 802.11 a/b/g/n and/or 802.20, all or a portion of the Internet, and/or any other communication system or systems at one or more locations. The network may communicate with, for example, Internet Protocol (IP) packets, Frame Relay frames, Asynchronous Transfer Mode (ATM) cells, voice, video, data, and/or other suitable information between network addresses.

**The client 2, 3, 4** may be any computing device operable to connect to or communicate with at least the computer system 1 using the network 5. In general, the client 2, 3, 4 comprises an electronic computing device operable to receive, transmit, process, and store any appropriate data associated with the invention. Generally, the client 2, 3, 4 includes a processor, a client application, a data memory, and/or an interface.

The client application is any type of application that allows the client 2, 3, 4 to navigate to/from, request, view, edit, delete, and or manipulate content on the client. In some implementations, the client application can be and/or include a web browser. In some implementations, the client-application can use parameters, metadata, and other information received at launch to access a particular set of data from the computer system 1.

Once a particular client **multi-user document generation application** is launched, a user may interactively process a task, event, or other information associated with the computer system 1. Further, although mainly described as a single client multi-user document generation application, the client multi-user document generation application may be implemented as multiple client applications in the client 2, 3, 4. In some implementations, the client application may act as a Graphical User Interface (GUI) for the multi-user document generation application and/or other components of computer system 1 and/or other components of the invention.

A network interface is used by the client 2, 3, 4, for communicating with other computer systems, including the computer system 1, using network 5.

There may be any number of clients 2, 3, 4 associated with the example computer system 1. For example, while the illustrated example of the invention includes three client 2, 3, 4 communicably coupled to the computer system 1 using network 5, alternative implementations of the invention may include any number of clients 2, 3, 4 suitable for the purposes of the invention.

The illustrated client 2, 3, 4 are intended to encompass any computing device such as a desktop computer, laptop/notebook computer, wireless data port, smart phone, personal data assistant (PDA), tablet computing device, one or more processors within these devices, or any other suitable processing device. For example, the client 2, 3, 4 may comprise a computer that includes an input device, such as a keypad, touch screen, or other device that can accept user information, and an output device that conveys information associated with the operation of the computer system 1 or the client itself, including digital data, visual and/or audio information, or a GUI.

The following described computer-implemented methods, computer-readable media, computer systems, and components of the example computer system 1 provide a part of its functionalities through **one or more graphical user interfaces** (GUls) providing an efficient and user-friendly presentation of data. In general, the computer system 1 is a server that stores one or more multi-user document generation applications, where at least a portion of the multi-user document generation applications are executed using requests and responses sent by clients 2, 3, 4.

In some implementations, the computer system 1 may store a plurality of different applications. In other implementations, the computer system 1 may be a dedicated server meant to store and execute only a single multi-user document generation application. In some implementations, the computer system 1 may comprise a web server, where the multi-user document generation applications represent one or more web-based applications accessed and executed by the client 2, 3, 4, using the network 5 or directly at the computer system 1 to perform the programmed tasks or operations of the multi-user document generation application. In some implementations, the computer system 1 can be used to generate, store, edit, transmit, and/or delete documents and associated data. The computer system 1 is responsible for receiving requests using the network 5 from one or more applications associated with the client 2, 3, 4 and responding to the received requests by processing said requests in one or more multi-user document generation applications. In addition to requests from the client 2, 3, 4, requests may also be sent to the computer system 1 from internal users, other automated applications, as well as any other appropriate entities, individuals, systems, or computers.

In some implementations, the multi-user document generation application can provide GUI interfaces or interface with one or more other components of the computer system 1 to provide GUI interfaces that assist with the conversion of the initial document in an improved and consensual document. For example, contextual requirement elements and/or improvement elements issued by a multi-user document generation application of computer system 1 can be entered and submitted to the client 2, 3, 4, across network 5 using a GUI interface. When processed by the client 2, 3, 4, a GUI interface associated with a corresponding multi-user document generation application could be used to process the initial document in an improved and consensual document and result in a returned HTML or another formatted document that can be rendered by a client application, for example a web browser.

In some implementations, any and/or all components of the computer system 1, both hardware and/or software, may interface with each other and/or the interface using an **application programming interface** (API) and/or a service layer. The API may include specifications for routines, data structures, and object classes. The API may be either computer-language independent or dependent and refer to a complete interface, a single function, or even a set of APIs. The service layer provides software services to the computer system 1. The functionality of the computer system 1 may be accessible for all service consumers using this service layer. Software services, such as those provided by the service layer, provide reusable, defined functionalities through a defined interface. For example, the interface may be software written in JAVA, C++, or other suitable language providing data in extensible markup language (XML) format or another suitable format. While described as an integrated component of the computer system 1 alternative implementations may illustrate the API and/or the service layer as stand-alone components in relation to other components. Moreover, any or all parts of the API and/or the service layer may be implemented as child or sub-modules of another software module, enterprise application, or hardware module without departing from the scope of this disclosure.

The document can be generated, stored, and/or converted from/into any suitable format or form, for example, binary, text, numerical, a database file, a flat file, or the like. In some instances, the document can be referenced by and for inclusion into other suitable data. In some implementations, the document can be directly accessed by any suitable component of the invention, for example a multi-user document generation application and/or a client 2, 3, 4.

The multi-user document generation application is any type of application that allows the client 2, 3, 4 to request, view, add, edit, delete, and/or consume content on the client 2, 3, 4 obtained from the computer system 1.

In some implementations, the multi-user document generation application can also use other application data including content provider, addresses, specifications, content lists, access requirements, or other suitable data.

Once a particular multi-user document generation application is launched, a client 2, 3, 4 may interactively process a task, event, or other information associated with the computer system 1.

Hence, as already discussed, the present invention, in particular the computer system 1, is useful to implement a framed method of generating a document in a multiuser environment such as a method for generating a document in a multi-user environment according to the invention.

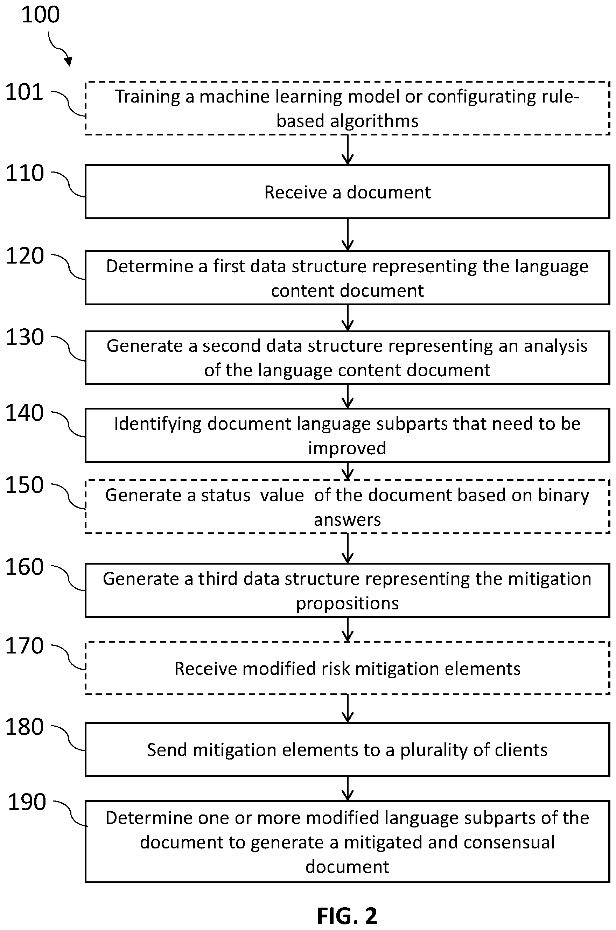

An implementation of the present invention is now described as a method for generating a document in a multiuser environment in reference to FIG. 2. Such an implementation and all its embodiments can be executed by a computer system 1 previously described.

According to an **aspect,** the invention relates to **a method 100 for generating a document in a multi-user environment.** In particular, the method is for using rule-based algorithms to convert a proposed document in an improved and consensual document.

As shown in **figure 2****,** the method according to the invention comprises the steps of: - receiving 110 a document comprising a plurality of language subparts forming the language content of the document; - Determining 120 a first data structure representing the language content document - Generating 130 a second data structure representing an analysis of the language content document; - Identifying 140 document language subparts that need to be improved; - Generating 160 a third data structure representing the mitigation propositions; - Sending 180 mitigation elements to a plurality of clients, and; - Determining 190 one or more modified language subparts of the document when a mitigation validation message has been received from at least two clients to generate a risk-mitigated and consensual document.

As it will be described hereafter, the method 100 for generating a document in a multi-user environment according to the invention is mainly based on:
- the determination of a **first data structure** including document language subparts, said subparts being classified according to one or more classification of language element, and
- the generation, based on the classification of the document language subparts and using machine learning or a rule-based algorithm, of a **second data structure** representing an analysis of the language content document, the second data structure including contextual requirement elements associated to document language subparts, and
- the generation of a **third data structure** representing improvement propositions, the third data structure including improvement elements associated to document language subparts.

This method is particularly adapted for consensual modification of a document in a multiuser environment and, produces better results than other methods already proposed for the generation of a document in a multi-user environment.

In an embodiment, the machine learning or a rule-based algorithm have been previously trained. However, the invention set out herein can also comprise an embodiment where the machine learning or rule-based algorithms are trained as part of the method according to the invention.

As shown in figure 2, the method 100 for generating a document in a multi-user environment according to the invention can comprise a facultative **step of training 101 a machine learning model or configurating rule-based algorithms.**

Machine learning is now widely adopted in various industrial fields. Learning models or Prediction models can be divided into unsupervised learning methods and supervised learning methods. The unsupervised learning methods make it possible to determine groups of observations without *a priori.* Hence, those groups will be formed without a need for a label value on input data. On the contrary, the supervised learning methods link an input to an output based on example input-output pairs.

Preferably, in the present invention, a machine learning technique is used to build a learning model, preferably a supervised learning model, configured to generate a second data structure representing an analysis of the language content document, the second data structure including contextual requirement elements associated to document language subparts, the contextual requirement elements preferably forming requests for binary answers. Among supervised learning methods, neural networks, classification or regression trees, nearest neighbor search, and random forest are some of the most robust and efficient machine learning techniques according to the invention.

Preferably, in the present invention, a machine learning technique is also used to build a prediction model, preferably a supervised prediction model configured to identify document language subparts that need to be improved.

More preferably, in the present invention, a machine learning technique is also used to build a prediction model, preferably a supervised prediction model, configured to generate a third data structure representing improvement propositions.

As illustrated in figure 2, a method 100 for generating a document in a multi-user environment according to the invention comprises a **step of receiving 110 a document.**

In particular the document or initial document can correspond to a document that needs the input from a plurality of user for its completion. Document according to the invention can be any type of file comprising intelligible data. For example, the document can be a contract, a term sheet, project proposal, a norm, or a book.

Preferably, the received document comprises a plurality of language subparts forming the language content of the document. Such subparts can consist in sentences, paragraphs or sections. As the document can be constituted of a plurality of files, subparts can consist in files. Preferably, subparts consist in sentences, paragraphs or sections.

As illustrated in the figure 2, a method 100 for generating a document in a multi-user environment according to the invention comprises a **step of determining 120 a first data structure representing the language content document.**

The determination of the first data structure is made by one or more processors, preferably based on the plurality of language subparts of the document.

A first data structure according to the invention includes document language subparts. Moreover, the document language subparts are classified according to one or more classification of language element.

Such classification of language element can be related to specialty area. Hence, depending on the document analyzed the classification of language element can be different. Such classification of language element can for example be done according to a repertoire of rules, but also according to one or more terms dictionaries or according to machine learning. Alternatively, the classification can be at least partially done depending on the instruction received from a client 2, 3, 4.

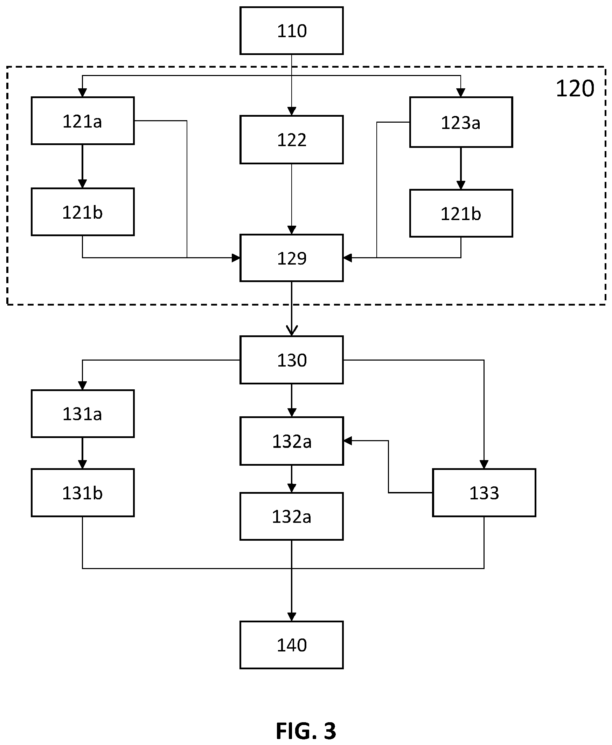

As shown in **figure 3****,** the document can undergo 121a an analysis based on a previously trained learning model. This step can be followed by a transmission 121b of a preliminary first data structure to a client for verification.

Alternatively, the document can be transmitted 122 to a client 2 for the production of the first data structure.

Alternatively, the document can undergo 123a an automatic analysis via Natural Language Processing coupled to a dictionary in order to create a preliminary first data structure to be verified or a first data structure.

Preferably, the one or more hardware processors 10 receive for each subpart an identifier 129 for each document language subparts. The identifier being preferably a means to classify each document language subparts in a plurality of specialty areas.

For example, it can comprise an automated analysis and comparison of different clauses in a contract to known clauses.

Moreover, the method according to the invention can comprise a step of selecting a plurality of client which are differentiated based for example on the ID of their main user. This selection can be generated from a first data structure representing the language content document.

Indeed, based on these information's and preferably on metadata associated to the document, and on a directory comprising the potential users, the method according to the invention can select a suitable team.

In other words, a method according to the invention can comprise a step of determining a suitable group of client/user identifier, such determination being preferably based on the first data structure and on a directory comprising the potential users/client identifier.

Such selection can also be based on data accumulated on previously processed documents and their outcomes (time of processing, agreement by parties...).

The suitable group of client/user identifier will receive authorization to review the document, modify the document and/or select mitigation actions.

Back to figure 2, the method 100 for generating a document in a multi-user environment according to the invention comprises a **step of generating 130 a second data structure** representing an analysis of the language content document.

The second data structure includes contextual requirement elements associated to document language subparts, the contextual requirement elements preferably forming requests for binary answers.

This step is preferably based on the classification of the document language subparts and using machine learning or a rule-based algorithm. Preferably, the machine learning being trained with or the rule-based algorithm being based on a first repository comprising a plurality of keywords and/or key principles associated with the contextual requirement elements and stored on the data memory 20.

In particular, it can use a key principles questions repository 24 (figure 1), and rule-based algorithm in order to generate a second data structure comprising the good association.

Advantageously, one or more hardware processors are further configured by machine readable instructions to generate a complementary data structure including guidance elements associated to contextual requirement elements, based on the second data structure and using machine learning or a rule-based algorithm.

As illustrated in figure 3, the method according to the invention can comprise an identification 131a of keywords present in the second data structure for example based on a from a keyword repository 21 (figure 1). The method can comprise an analysis 131b of those keywords for example by a Natural Language Processing or machine learning to define binary answers.

A method according to the invention can also comprise a step of sending 132a the second data structure to an analyzer client 2 and receive 132b binary answers. These steps can also take advantage of a preliminary identification of keywords present in the second data structure and analysis of those keywords by a Natural Language Processing.

As mentioned, in on embodiment, a method according to the invention comprise a step of receiving, from the analyzer client 2, a binary answer for each of the plurality of questions,

As illustrated in figure 3, the method according to the invention can comprise an analysis of the second data structure by a trained learning model 133. Such an analysis can generate at least a part of the binary answers based on previously documents.

Back to figure 2, the method 100 for generating a document in a multi-user environment according to the invention comprises a step of identifying 140 sections at risk, the sections at risk being document language subparts that need to be modified. The step can also be a **step of identifying 140 document language subparts that need to be improved.**

The method can also comprise identifying inadequate binary answers from the binary answers. Such identification can be made by one or more hardware processors. Inadequate binary answer are for example answer that are not in line with predetermined key principles classified in plurality of specialty areas.

Preferably, the one or more hardware processors 10 received several binary answers for each document language subparts.

Hence, this step is preferably based on binary answers and using machine learning or a rule-based algorithm. Preferably, the machine learning being trained with or the rule-based algorithm being based on a second repository comprising key principles associated with the binary answers and stored on the data memory 20.

Back to figure 1, the method 100 for generating a document in a multi-user environment according to the invention can comprise a **step of generating 150 a status value of the document.** The status value is preferably generated based on binary answers and using machine learning or a rule-based algorithm.

This step can be performed by one or more hardware processors 10 configured by machine readable instructions.

Said status value can represent a level of advancement toward a quality goal of the document. Hence, a process according to the invention can comprise a step of generating a progress bar illustrating a state of the document, said progress bar being updated actions completed by team members. Indeed, completion of action by team members will send messages to the computer system in order to update the data related to the document.

The method can also comprise identifying from the received answers, by one or more hardware processors, of inadequate binary answers that are not in line with predetermined key principles for example classified in plurality of specialty areas. Hence, the invention can comprise a step of generating a status value for a plurality of specialty areas related to the document. For example, in one hand the method can determine that technological aspects of the documents represent a risk as they are not well described, the method will thus generate a low status value for the specialty areas "technological aspects" of the document. In another hand, the method can determine that investment aspects are well covered and thus will generate a high-status value for the specialty areas "investment aspects" of the document.

A method according to the invention can comprise a step of generating a graph illustrating the status values for all the specialty areas identified in the document.

A method according to the invention can also comprise a step of generating a list comprising all the document language subparts that need to be improved and preferably a status for each of the document language subparts that needs to be improved.

A method according to the invention can also comprise a step of generating a list comprising all the contextual requirement elements with the binary answers.

A method according to the invention can comprises a step of generating a document comporting document language subparts that need to be improved and a weight for each document language subparts that need to be improved, preferably said document also comprising the status of the improvement (ongoing or approved).

As shown in figure 2, the method 100 for generating a document in a multi-user environment according to the invention comprises a **step of generating 160 a third data structure representing the mitigation propositions.** In particular, the third data structure can include risk mitigation elements associated to document language subparts.

Preferably, the document language subparts being identified as needing to be improved, the machine learning being trained with or the rule-based algorithm being based on a third repository comprising improvement propositions associated with the document language subparts and stored on the data memory 20.

This step can be performed based on binary answers and using machine learning or a rule-based algorithm.

The method according to the invention can comprises a step of generating a pre-matching KCP for at least one subpart of the document, said pre-matching being generated through plain text comparison and includes value of similarity.

In a preferred method according to the invention, mitigation actions are proposed based on a supervised machine learning model trained at least partially with already treated documents.

The method for generating a document in a multi-user environment according to the invention can comprise a step of sending risk mitigation elements to a client. Hence, back to figure 1, a method 100 for generating a document in a multi-user environment according to the invention can comprise a **step of receiving 170 modified mitigation elements.**

This step can be performed by one or more hardware processors 10 configured by machine readable instructions.

A client 3 can be configured to modify a mitigation element. However, such modification will be considered only if the client possesses the authorization to do these modifications. Moreover, a method according to the invention can comprise a step of receive, from the analyzer client 2, a selected mitigation action related to an inadequate answer and an identifier of a user/client in charge of said selected mitigation action.

As shown in figure 2, the method 100 for generating a document in a multi-user environment according to the invention comprises a **step of sending 180 mitigation elements to a plurality of clients.** Preferably, each of the plurality of clients being pre-authorized or operated by a pre-authorized user.

For example, the method according to the invention can comprise a step of sending a notification comprising a selected mitigation action, for each of the selected mitigation actions, to a client 3,4 of a person in charge.

The method can then comprise a step of receiving a notification from the client 3,4 of a person in charge. The notification can comprise an authentication token or any proof of authentication.

The method according to the invention can also comprise a step of receiving 190, from the client 3, 4 of a person in charge, a validation information related to the mitigation action of the inadequate answer and updating a status value of the document.

As shown in figure 2, the method 100 for generating a document in a multi-user environment according to the invention comprises a **step of determining 190 one or more modified language subparts of the document when a mitigation validation message has been received from at least two clients to generate a mitigated and consensual document.**

Hence, the invention allows a generation of a mitigated and consensual document in a multiuser environment within an automated workflow comprising the generation of several data structure allowing rapid processing of the document and the generation of modified language subparts of the document validated by all stakeholders.

The computer system 1 according to the invention and the method according to the invention can also be configured to or comprise: Receiving, by a network interface 30, an improvement validation message from at least two of the plurality of clients 2,3,4 with an authentication token or proof of authentication indicating the pre-authorization, the improvement validation message validating the sent improvement elements.

Hence, determining 190 one or more modified language subparts of the document can also be based on the improvement validation message.

Moreover, the computer system 1 according to the invention and the method according to the invention can also be configured to or comprise: Generating the improved and consensual document including the one or more modified language subparts.

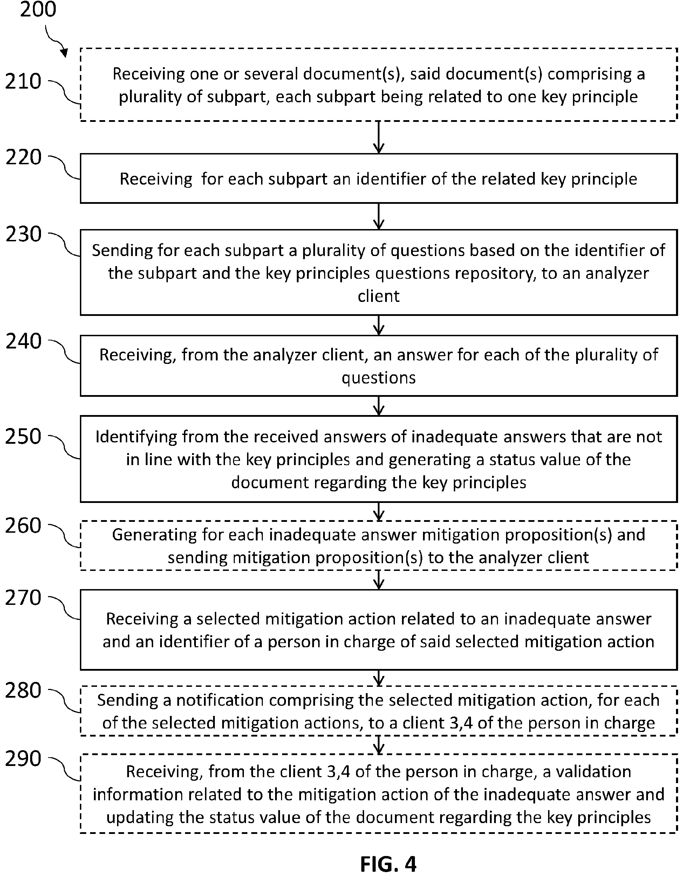

Another embodiment of the method of the invention is illustrated in **figure 4****.**

Indeed, a method according to the invention can be described as a method for processing one or several document(s) and determining a status value of the document(s) according to key principles in a multi-user environment.

As previously, the method according to the invention is implemented by a computer device comprising one or more hardware processors 10, a network interface 30, a data memory 20. Said data memory 20 can comprise a keyword repository 21, a segmentation repository 22, and a key principles identifier repository 23, a key principles questions repository 24, a key principles example repository 25, a key principles mitigation repository 26.

As illustrated in figure 4, the method according to the invention can comprising the step of receiving 210 one or several document(s). This document comprises a plurality of subpart (e.g. paragraph or annex), each subpart being related to one key principles.

The method according to the invention comprises the step of receiving 220 for each subpart an identifier of the related key principle. Preferably, the one or more hardware processors 10 receive such an information.

The method according to the invention comprises the step of sending 230 for each subpart, by the network interface 30, a plurality of questions based on the identifier of the subpart and the key principles questions repository, to an analyzer client, preferably, for each question, examples based on the key principles example repository are also send to the analyzer client. More preferably, questions based on the identifier of the subpart are binary answer questions.

After that, the method according to the invention comprises the step of receiving 240, from the analyzer client, an answer for each of the plurality of questions sending for each subpart. The reception can be done by the network interface 30.

The method according to the invention comprises the step of identifying 250 from the received answers of inadequate answers. This identification is preferably done by the one or more hardware processors 10.

In particular, inadequate answers are binary answers that are not in line with key principles such as the key principles stored in data memory 20.

The method can also comprise a step of generating a status value of the document regarding the key principles based on the received answers.

The method according to the invention can comprise the step of generating 260 for each inadequate answer mitigation proposition(s). This generation is preferably done by the one or more hardware processors 10.

In particular, this step can use the key principles mitigation repository 26. For example, this repository generated from uploaded data or machine learning generated data, can comprise modified subparts of documents that can replace subparts identified as inadequate ones. Mitigation proposition can be sent to the analyzer client 2 by the network interface.

The method according to the invention comprises the step of receiving 270, from the analyzer client, a selected mitigation action related to an inadequate answer and an identifier of a user/client in charge of said selected mitigation action.

The method can also include sending 280 a notification comprising the selected mitigation action, for each of the selected mitigation actions, to a client of the user in charge of said selected mitigation action.

Following this, the method can include receiving, from the client of the person in charge, a mitigation validation information related to the mitigation action of the inadequate answer and updating the status value of the document regarding the key principles.

Such a validation information can also be used in the step of determining 190 one or more modified language subparts of the document when a mitigation validation message has been received from at least two clients to generate a mitigated and consensual document.

## Claims

1. A computer system (1) for generating a document in a multi-user environment, said computer system being configured for using rule-based algorithms to convert a proposed document into an improved and consensual document, the computer system comprising :
one or more hardware processors (10) configured by machine readable instructions, stored on a data memory (20) in communication with one or more hardware processors (10) and a network interface (30), to:
- Receiving (110) a document, said document comprising a plurality of language subparts forming the language content of the document;
- Determining (120), based on the plurality of language subparts, a first data structure representing the language content document, the first data structure including document language subparts, the document language subparts being classified according to one or more classifications of language elements;
- Generating (130), based on the classification of the document language subparts and using machine learning or a rule-based algorithm, a second data structure representing an analysis of the language content document, the second data structure including contextual requirement elements associated to document language subparts, the contextual requirement elements preferably forming requests for binary answers;
- Identifying (140), based on binary answers and using machine learning or a rule-based algorithm, document language subparts that need to be improved;
- Generating (160), based on binary answers and using machine learning or a rule-based algorithm, a third data structure representing mitigation propositions, the third data structure including mitigation elements associated to the document language subparts that need to be improved;
- Sending (180), by the network interface (30), said mitigation elements to a plurality of authorized clients (2,3,4); and
- Receiving (190) from at least two of said plurality of authorized clients mitigation validation messages related to the mitigation elements with a proof of authentication and determining (190) one or more modified language subparts of the document based on the received mitigation validation messages, when the received mitigation validation messages validate the sent mitigation elements, to generate an improved and consensual document including the determined one or more modified language subparts.

2. The computer system according to claim 1 wherein one or more hardware processors are further configured by machine readable instructions to generate (150) a status value of the document based on binary answers and using machine learning or a rule-based algorithm.

3. The computer system according to claims 1 or 2, wherein one or more hardware processors are further configured by machine readable instructions to send, through the network interface (30), the generated mitigation elements to a client (2,3,4) configured to modify said mitigation elements and receive (170) modified mitigation elements from said client, the modified mitigation elements being sent (180) to said plurality of authorized clients (2,3,4).

4. The computer system according to anyone of claims 1 to 3, wherein one or more hardware processors are further configured by machine readable instructions to generate (135), based on the second data structure and using machine learning or a rule-based algorithm, a complementary data structure including guidance elements associated to contextual requirement elements.

5. The computer system according to anyone of claims 1 to 4, wherein one or more hardware processors are furthermore configured by machine readable instructions to generate a progress bar illustrating a state of the document, said progress bar being updated by team members.

6. The computer system according to anyone of claim 1 to 5, wherein one or more hardware processors are further configured by machine readable instructions to generate a graph illustrating the status values for a plurality of specialty areas of the document.

7. The computer system according to claim 6, wherein one or more hardware processors are further configured by machine readable instructions to generate a list comprising deviations and preferably status of each deviation.

8. The computer system according to claim 6 or 7, wherein one or more hardware processors are further configured by machine readable instructions to generate a document comporting specialty areas deviation and a weight for each specialty areas deviation, preferably said document also comprising the status of the mitigation elements.

9. The computer system according to anyone of claims 6 to 8, wherein one or more hardware processors are further configured by machine readable instructions to generate a pre-matching specialty areas for at least one subpart of the document, said pre-matching specialty areas being generated through plain text comparison and including a value of similarity.

10. The computer system according to anyone of claims 3 to 9, wherein mitigation elements are proposed based on a supervised machine learning model trained at least partially with already treated documents.

11. A method (100) for generating a document in a multi-user environment, said method being implemented on a computer system comprising one or more hardware processors (10) configured by machine readable instructions, stored on a data memory (20) in communication with the one or more hardware processors (10) and a network interface (30), the method comprising the steps of:
- Receiving (110) a document, said document comprising a plurality of language subparts forming the language content of the document;
- Determining (120), based on the plurality of language subparts, a first data structure representing the language content document, the first data structure including document language subparts, the document language subparts being classified according to one or more classification of language elements;
- Generating (130), based on the classification of the document language subparts and using machine learning or a rule-based algorithm, a second data structure representing an analysis of the language content document, the second data structure including contextual requirement elements associated to document language subparts, the contextual requirement elements preferably forming requests for binary answers;
- Identifying (140), based on binary answers and using machine learning or a rule-based algorithm, document language subparts that need to be improved;
- Generating (160), based on binary answers and using machine learning or a rule-based algorithm, a third data structure representing mitigation propositions, the third data structure including mitigation elements associated to the document language subparts that need to be improved;
- Sending (180), by the network interface (30), said mitigation elements to a plurality of clients (2,3,4); and
- Receiving (190) from at least two of said plurality of authorized clients mitigation validation messages related to the mitigation elements with a proof of authentication and determining (190) one or more modified language subparts of the document based on the received mitigation validation messages, when the received improvement validation messages validate the sent mitigation elements, to generate an improved and consensual document including the determined one or more modified language subparts.

12. The method (200) according to the preceding claim, said method being implemented by a computer system (1) comprising one or more hardware processors (10), a network interface (30), a data memory (20) comprising a keyword repository (21), a segmentation repository (22), and a key principles identifier repository (23), a key principles questions repository (24), a key principles example repository (25), a key principles mitigation repository (26), said method further comprising:
- The received document(s), by the network interface (30), comprising a plurality of subparts, each subpart being related to one key principles;
- Receiving (220) for each subpart, by the one or more hardware processors (10), an identifier of the related key principle;
- Sending (230) for each subpart, by the one or more hardware processors (10), said requests for binary answers, to an analyzer client (2), said requests being based on the identifier of the subpart and the key principles questions repository (24),
- Receiving (240), from the analyzer client (2), an answer for each of said requests,
- Identifying (250) from the received answers, by the one or more hardware processors (10), inadequate answers that are not in line with the key principles and generating a status value of the document regarding the key principles;
- Generating said third data structure representing mitigation propositions, for each of said inadequate answers, and sending mitigation proposition(s) to the analyzer client (2);
- Receiving (270), from the analyzer client (2), a selected mitigation proposition among said sent mitigation proposition(s) and an identifier of a person in charge of said selected mitigation proposition;
- Sending (280) a notification comprising the selected mitigation proposition, for each of the selected mitigation actions, to a client (3, 4) of the identified person in charge; and
- Receiving (290), from the client (3, 4) of the identified person in charge, said mitigation validation message related to the mitigation proposition of the inadequate answer and updating the status value of the document regarding the key principles.

13. A computer program comprising instructions stored in a data memory of a computer device for implementing a method according to anyone of claims 11 or 12.

## Patentansprüche

1. Computersystem (1) zum Generieren eines Dokuments in einer Mehrbenutzerumgebung, wobei das Computersystem für das Verwenden regelbasierter Algorithmen konfiguriert ist, um ein vorgeschlagenes Dokument in ein verbessertes und konsensuelles Dokument umzuwandeln, wobei das Computersystem umfasst:
einen oder mehrere Hardwareprozessoren (10), die durch maschinenlesbare Anweisungen, die auf einem Datenspeicher (20) gespeichert sind und mit einem oder mehreren Hardwareprozessoren (10) und einer Netzwerkschnittstelle (30) kommunizieren, konfiguriert sind zum:
- Empfangen (110) eines Dokuments, wobei das Dokument eine Vielzahl von Sprachunterteilen umfasst, die den Sprachinhalt des Dokuments bilden;
- Bestimmen (120), basierend auf der Vielzahl von Sprachunterteilen, einer ersten Datenstruktur, die das Sprachinhaltsdokument darstellt, wobei die erste Datenstruktur Dokumentsprachunterteile einschließt, wobei die Dokumentsprachunterteile gemäß einer oder mehreren Klassifikationen von Sprachelementen klassifiziert sind;
- Generieren (130), basierend auf der Klassifizierung der Dokumentsprachunterteile und unter Verwendung von maschinellem Lernen oder eines regelbasierten Algorithmus, einer zweiten Datenstruktur, die eine Analyse des Sprachinhaltsdokuments darstellt, wobei die zweite Datenstruktur kontextuelle Anforderungselemente einschließt, die den Dokumentsprachunterteilen zugeordnet sind, wobei die kontextuellen Anforderungselemente vorzugsweise Anforderungen für binäre Antworten bilden;
- Identifizieren (140), basierend auf binären Antworten und unter Verwendung von maschinellem Lernen oder eines regelbasierten Algorithmus, von Dokumentsprachunterteilen, die verbessert werden müssen;
- Generieren (160), basierend auf binären Antworten und unter Verwendung von maschinellem Lernen oder eines regelbasierten Algorithmus, einer dritten Datenstruktur, die Mitigationsvorschläge darstellt, wobei die dritte Datenstruktur Mitigationselemente einschließt, die den zu verbessernden Dokumentsprachunterteilen zugeordnet sind;
- Senden (180) der Mitigationselemente durch die Netzwerkschnittstelle (30) an eine Vielzahl autorisierter Clients (2, 3, 4); und
- Empfangen (190), von mindestens zwei aus der Vielzahl autorisierter Clients, von Mitigationsvalidierungsnachrichten, die sich auf die Mitigationselemente mit einem Authentifizierungsnachweis beziehen, und Bestimmen (190) eines oder mehrerer geänderter Dokumentsprachunterteile basierend auf den empfangenen Mitigationsvalidierungsnachrichten, wenn die empfangenen Mitigationsvalidierungsnachrichten die gesendeten Mitigationselemente validieren, um ein verbessertes und konsensuelles Dokument zu generieren, das den einen oder die mehreren bestimmten geänderten Sprachunterteile einschließt.

2. Computersystem nach Anspruch 1, wobei ein oder mehrere Hardwareprozessoren ferner durch maschinenlesbare Anweisungen zum Generieren (150) eines Statuswerts des Dokuments basierend auf binären Antworten und unter Verwendung maschinellen Lernens oder eines regelbasierten Algorithmus konfiguriert sind.

3. Computersystem nach Anspruch 1 oder 2, wobei ein oder mehrere Hardwareprozessoren ferner durch maschinenlesbare Anweisungen konfiguriert sind, um die generierten Mitigationselemente über die Netzwerkschnittstelle (30) an einen Client (2, 3, 4) zu senden, der konfiguriert ist, um die Mitigationselemente zu ändern und geänderte Mitigationselemente von dem Client zu empfangen (170), wobei die geänderten Mitigationselemente an die Vielzahl autorisierter Clients (2, 3, 4) gesendet (180) werden.

4. Computersystem nach einem der Ansprüche 1 bis 3, wobei ein oder mehrere Hardwareprozessoren ferner durch maschinenlesbare Anweisungen zum Generieren (135), basierend auf der zweiten Datenstruktur und unter Verwendung von maschinellem Lernen oder eines regelbasierten Algorithmus, einer komplementären Datenstruktur konfiguriert sind, die Leitelemente einschließt, die kontextuellen Anforderungselementen zugeordnet sind.

5. Computersystem nach einem der Ansprüche 1 bis 4, wobei ein oder mehrere Hardwareprozessoren des Weiteren durch maschinenlesbare Anweisungen konfiguriert sind, um einen Fortschrittsbalken zu generieren, der einen Zustand des Dokuments veranschaulicht, wobei der Fortschrittsbalken von Teammitgliedern aktualisiert wird.

6. Computersystem nach einem der Ansprüche 1 bis 5, wobei ein oder mehrere Hardwareprozessoren ferner durch maschinenlesbare Anweisungen konfiguriert sind, um ein Diagramm zu generieren, das die Statuswerte für eine Vielzahl von Spezialbereichen des Dokuments veranschaulicht.

7. Computersystem nach Anspruch 6, wobei ein oder mehrere Hardwareprozessoren ferner durch maschinenlesbare Anweisungen konfiguriert sind, um eine Liste zu generieren, die Abweichungen und vorzugsweise den Status jeder Abweichung umfasst.

8. Computersystem nach Anspruch 6 oder 7, wobei ein oder mehrere Hardwareprozessoren ferner durch maschinenlesbare Anweisungen konfiguriert sind, um ein Dokument zu generieren, das Abweichungen in den Spezialbereichen und eine Gewichtung für jede Abweichung in den Spezialbereichen umfasst, wobei das Dokument vorzugsweise auch den Status der Mitigationselemente umfasst.

9. Computersystem nach einem der Ansprüche 6 bis 8, wobei ein oder mehrere Hardwareprozessoren ferner durch maschinenlesbare Anweisungen konfiguriert sind, um vorab passende Spezialbereiche für mindestens einen Unterteil des Dokuments zu generieren, wobei die vorab passenden Spezialbereiche durch einen Klartextvergleich generiert werden und einen Ähnlichkeitswert einschließen.

10. Computersystem nach einem der Ansprüche 3 bis 9, wobei Mitigationselemente basierend auf einem überwachten maschinellen Lernmodell vorgeschlagen werden, das mindestens teilweise mit bereits behandelten Dokumenten trainiert wurde.

11. Verfahren (100) zum Generieren eines Dokuments in einer Mehrbenutzerumgebung, wobei das Verfahren auf einem Computersystem implementiert wird, das einen oder mehrere Hardwareprozessoren (10) umfasst, die durch maschinenlesbare Anweisungen konfiguriert sind, die auf einem Datenspeicher (20) gespeichert sind, der mit dem einen oder den mehreren Hardwareprozessoren (10) und einer Netzwerkschnittstelle (30) kommuniziert, das Verfahren umfassend die Schritte:
- Empfangen (110) eines Dokuments, wobei das Dokument eine Vielzahl von Sprachunterteilen umfasst, die den Sprachinhalt des Dokuments bilden;
- Bestimmen (120), basierend auf der Vielzahl von Sprachunterteilen, einer ersten Datenstruktur, die das Sprachinhaltsdokument darstellt, wobei die erste Datenstruktur Dokumentsprachunterteile einschließt, wobei die Dokumentsprachunterteile gemäß einer oder mehreren Klassifikationen von Sprachelementen klassifiziert sind;
- Generieren (130), basierend auf der Klassifizierung der Dokumentsprachunterteile und unter Verwendung von maschinellem Lernen oder eines regelbasierten Algorithmus, einer zweiten Datenstruktur, die eine Analyse des Sprachinhaltsdokuments darstellt, wobei die zweite Datenstruktur kontextuelle Anforderungselemente einschließt, die den Dokumentsprachunterteilen zugeordnet sind, wobei die kontextuellen Anforderungselemente vorzugsweise Anforderungen für binäre Antworten bilden;
- Identifizieren (140), basierend auf binären Antworten und unter Verwendung von maschinellem Lernen oder eines regelbasierten Algorithmus, von Dokumentsprachunterteilen, die verbessert werden müssen;
- Generieren (160), basierend auf binären Antworten und unter Verwendung von maschinellem Lernen oder eines regelbasierten Algorithmus, einer dritten Datenstruktur, die Mitigationsvorschläge darstellt, wobei die dritte Datenstruktur Mitigationselemente einschließt, die den zu verbessernden Dokumentsprachunterteilen zugeordnet sind;
- Senden (180) der Mitigationselemente durch die Netzwerkschnittstelle (30) an eine Vielzahl von Clients (2, 3, 4); und
- Empfangen (190), von mindestens zwei aus der Vielzahl autorisierter Clients, von Mitigationsvalidierungsnachrichten, die sich auf die Mitigationselemente mit einem Authentifizierungsnachweis beziehen, und Bestimmen (190) eines oder mehrerer geänderter Dokumentsprachunterteile basierend auf den empfangenen Mitigationsvalidierungsnachrichten, wenn die empfangenen Verbesserungsvalidierungsnachrichten die gesendeten Mitigationselemente validieren, um ein verbessertes und konsensuelles Dokument zu generieren, das den einen oder die mehreren bestimmten geänderten Sprachunterteile einschließt.

12. Verfahren (200) nach dem vorstehenden Anspruch, wobei das Verfahren durch ein Computersystem (1) implementiert wird, umfassend einen oder mehrere Hardwareprozessoren (10), eine Netzwerkschnittstelle (30), einen Datenspeicher (20), umfassend ein Schlüsselwort-Repository (21), ein Segmentierungs-Repository (22), ein Schlüsselprinzipienkennungs-Repository (23), ein Schlüsselprinzipienfragen-Repository (24), ein Schlüsselprinzipienbeispiel-Repository (25) und ein Schlüsselprinzipienmitigations-Repository (26), das Verfahren ferner umfassend:
- das bzw. die über die Netzwerkschnittstelle (30) empfangene(n) Dokument(e), umfassend eine Vielzahl von Unterteilen, wobei sich jeder Unterteil auf ein Schlüsselprinzip bezieht;
- Empfangen (220) einer Kennung des zugehörigen Schlüsselprinzips für jeden Unterteil durch den einen oder die mehreren Hardwareprozessoren (10);
- Senden (230) der Anforderungen für binäre Antworten für jeden Unterteil durch den einen oder die mehreren Hardwareprozessoren (10) an einen Analyseclient (2), wobei die Anforderungen auf der Kennung des Unterteils und dem Schlüsselprinzipienfragen-Repository (24) basieren,
- Empfangen (240) einer Antwort von dem Analyseclient (2) auf jede dieser Anforderungen,
- Identifizieren (250) inadäquater Antworten, die nicht den Schlüsselprinzipien entsprechen, aus den empfangenen Antworten durch den einen oder die mehreren Hardwareprozessoren (10) und Generieren eines Statuswerts des Dokuments hinsichtlich der Schlüsselprinzipien;
- Generieren der dritten Datenstruktur, die Mitigationsvorschläge für jede der inadäquaten Antworten darstellt, und Senden des Mitigationsvorschlags bzw. der Mitigationsvorschläge an den Analyseclient (2);
- Empfangen (270) eines ausgewählten Mitigationsvorschlags aus den gesendeten Mitigationsvorschlägen von dem Analyseclient (2) und einer Kennung einer für den ausgewählten Mitigationsvorschlag verantwortlichen Person;
- Senden (280) einer Benachrichtigung, umfassend den ausgewählten Mitigationsvorschlag für jede der ausgewählten Mitigationsmaßnahmen, an einen Client (3, 4) der identifizierten verantwortlichen Person; und
- Empfangen (290), von dem Client (3, 4) der identifizierten verantwortlichen Person, der Mitigationsvalidierungsnachricht, die sich auf den Mitigationsvorschlag der inadäquaten Antwort bezieht, und Aktualisieren des Statuswerts des Dokuments hinsichtlich der Schlüsselprinzipien.

13. Computerprogramm, umfassend Anweisungen, die in einem Datenspeicher einer Computervorrichtung gespeichert sind, um ein Verfahren nach einem der Ansprüche 11 oder 12 zu implementieren.

## Revendications

1. Système informatique (1) permettant de générer un document dans un environnement multi-utilisateurs, ledit système informatique étant configuré pour utiliser des algorithmes basés sur des règles afin de convertir un document proposé en un document amélioré et consensuel, le système informatique comprenant :
un ou plusieurs processeurs matériels (10) configurés par des instructions lisibles par machine, stockées sur une mémoire de données (20) en communication avec un ou plusieurs processeurs matériels (10) et une interface réseau (30), pour :
- la réception (110) d'un document, ledit document comprenant une pluralité de sous-parties linguistiques formant le contenu linguistique du document ;
- la détermination (120), sur la base de la pluralité de sous-parties linguistiques, d'une première structure de données représentant le document à contenu linguistique, la première structure de données comportant des sous-parties linguistiques du document, les sous-parties linguistiques du document étant classées selon une ou plusieurs classifications d'éléments linguistiques ;
- la génération (130), sur la base de la classification des sous-parties linguistiques du document et à l'aide de l'apprentissage automatique ou d'un algorithme basé sur des règles, d'une deuxième structure de données représentant une analyse du document à contenu linguistique, la deuxième structure de données comportant des éléments d'exigences contextuelles associés aux sous-parties linguistiques du document, les éléments d'exigences contextuelles formant de préférence des demandes de réponses binaires ;
- l'identification (140), sur la base de réponses binaires et à l'aide de l'apprentissage automatique ou d'un algorithme basé sur des règles, des sous-parties linguistiques du document qui doivent être améliorées ;
- la génération (160), sur la base de réponses binaires et à l'aide de l'apprentissage automatique ou d'un algorithme basé sur des règles, d'une troisième structure de données représentant des propositions d'atténuation, la troisième structure de données comportant des éléments d'atténuation associés aux sous-parties linguistiques du document qui doivent être améliorées ;
- l'envoi (180), par l'interface réseau (30), desdits éléments d'atténuation à une pluralité de clients autorisés (2,3,4) ; et
- la réception (190), de la part d'au moins deux de ladite pluralité de clients autorisés, de messages de validation d'atténuation relatifs aux éléments d'atténuation avec une preuve d'authentification et la détermination (190) d'une ou plusieurs sous-parties linguistiques modifiées du document sur la base des messages de validation d'atténuation reçus, lorsque les messages de validation d'atténuation reçus valident les éléments d'atténuation envoyés, afin de générer un document amélioré et consensuel comportant la ou les sous-parties linguistiques modifiées déterminées.

2. Système informatique selon la revendication 1, dans lequel un ou plusieurs processeurs matériels sont en outre configurés par des instructions lisibles par machine pour générer (150) une valeur d'état du document sur la base de réponses binaires et à l'aide de l'apprentissage automatique ou d'un algorithme basé sur des règles.

3. Système informatique selon les revendications 1 ou 2, dans lequel un ou plusieurs processeurs matériels sont en outre configurés par des instructions lisibles par machine pour envoyer, par l'intermédiaire de l'interface réseau (30), les éléments d'atténuation générés à un client (2,3,4) configuré pour modifier lesdits éléments d'atténuation et recevoir (170) des éléments d'atténuation modifiés de la part dudit client, les éléments d'atténuation modifiés étant envoyés (180) à ladite pluralité de clients autorisés (2,3,4).

4. Système informatique selon l'une quelconque des revendications 1 à 3, dans lequel un ou plusieurs processeurs matériels sont en outre configurés par des instructions lisibles par machine pour générer (135), sur la base de la deuxième structure de données et à l'aide de l'apprentissage automatique ou d'un algorithme basé sur des règles, une structure de données complémentaire comportant des éléments d'orientation associés à des éléments d'exigences contextuelles.

5. Système informatique selon l'une quelconque des revendications 1 à 4, dans lequel un ou plusieurs processeurs matériels sont en outre configurés par des instructions lisibles par machine pour générer une barre de progression illustrant un état du document, ladite barre de progression étant mise à jour par les membres de l'équipe.

6. Système informatique selon l'une quelconque des revendications 1 à 5, dans lequel un ou plusieurs processeurs matériels sont en outre configurés par des instructions lisibles par machine pour générer un graphique illustrant les valeurs d'état pour une pluralité de domaines de spécialité du document.

7. Système informatique selon la revendication 6, dans lequel un ou plusieurs processeurs matériels sont en outre configurés par des instructions lisibles par machine pour générer une liste comprenant des écarts et, de préférence, un état de chaque écart.

8. Système informatique selon la revendication 6 ou 7, dans lequel un ou plusieurs processeurs matériels sont en outre configurés par des instructions lisibles par machine pour générer un document contenant l'écart de domaines de spécialité et un poids pour chaque écart de domaines de spécialité, de préférence ledit document comprenant également l'état des éléments d'atténuation.

9. Système informatique selon l'une quelconque des revendications 6 à 8, dans lequel un ou plusieurs processeurs matériels sont en outre configurés par des instructions lisibles par machine pour générer des domaines de spécialité de pré-concordance pour au moins une sous-partie du document, lesdits domaines de spécialité de pré-concordance étant générés par comparaison de texte brut et comportant une valeur de similarité.

10. Système informatique selon l'une quelconque des revendications 3 à 9, dans lequel les éléments d'atténuation sont proposés sur la base d'un modèle d'apprentissage automatique supervisé entraîné au moins partiellement avec des documents déjà traités.

11. Procédé (100) de génération d'un document dans un environnement multi-utilisateurs, ledit procédé étant mis en œuvre sur un système informatique comprenant un ou plusieurs processeurs matériels (10) configurés par des instructions lisibles par machine, stockées sur une mémoire de données (20) en communication avec le ou les processeurs matériels (10) et une interface réseau (30), le procédé comprenant les étapes consistant à :
- recevoir (110) un document, ledit document comprenant une pluralité de sous-parties linguistiques formant le contenu linguistique du document ;
- déterminer (120), sur la base de la pluralité de sous-parties linguistiques, une première structure de données représentant le document à contenu linguistique, la première structure de données comportant des sous-parties linguistiques du document, les sous-parties linguistiques du document étant classées selon une ou plusieurs classifications d'éléments linguistiques ;
- générer (130), sur la base de la classification des sous-parties linguistiques du document et à l'aide de l'apprentissage automatique ou d'un algorithme basé sur des règles, une deuxième structure de données représentant une analyse du document à contenu linguistique, la deuxième structure de données comportant des éléments d'exigences contextuelles associés aux sous-parties linguistiques du document, les éléments d'exigences contextuelles formant de préférence des demandes de réponses binaires ;
- identifier (140), sur la base de réponses binaires et à l'aide de l'apprentissage automatique ou d'un algorithme basé sur des règles, des sous-parties linguistiques du document qui doivent être améliorées ;
- générer (160), sur la base de réponses binaires et à l'aide de l'apprentissage automatique ou d'un algorithme basé sur des règles, une troisième structure de données représentant des propositions d'atténuation, la troisième structure de données comportant des éléments d'atténuation associés aux sous-parties linguistiques du document qui doivent être améliorées ;
- envoyer (180), par l'interface réseau (30), lesdits éléments d'atténuation à une pluralité de clients (2,3,4) ; et
- recevoir (190), de la part d'au moins deux de ladite pluralité de clients autorisés, des messages de validation d'atténuation relatifs aux éléments d'atténuation avec une preuve d'authentification et déterminer (190) une ou plusieurs sous-parties linguistiques modifiées du document sur la base des messages de validation d'atténuation reçus, lorsque les messages de validation d'amélioration reçus valident les éléments d'atténuation envoyés, afin de générer un document amélioré et consensuel comportant la ou les sous-parties linguistiques modifiées déterminées.

12. Procédé (200) selon la revendication précédente, ledit procédé étant mis en œuvre par un système informatique (1) comprenant un ou plusieurs processeurs matériels (10), une interface réseau (30), une mémoire de données (20) comprenant un référentiel de mots clés (21), un référentiel de segmentation (22), et un référentiel d'identifiant de principes clés (23), un référentiel de questions de principes clés (24), un référentiel d'exemple de principes clés (25), un référentiel d'atténuation de principes clés (26), ledit procédé comprenant en outre :
- le ou les documents reçus, par l'interface réseau (30), comprenant une pluralité de sous-parties, chaque sous-partie étant liée à un principe clé ;
- la réception (220) pour chaque sous-partie, par le ou les processeurs matériels (10), d'un identifiant du principe clé correspondant ;
- l'envoi (230) pour chaque sous-partie, par le ou les processeurs matériels (10), desdites demandes de réponses binaires, à un client analyseur (2), lesdites demandes étant basées sur l'identifiant de la sous-partie et le référentiel de questions de principes clés (24),
- la réception (240), de la part du client analyseur (2), d'une réponse pour chacune desdites demandes,
- l'identification (250) à partir des réponses reçues, par le ou les processeurs matériels (10), de réponses inadéquates qui ne sont pas conformes aux principes clés et la génération d'une valeur d'état du document en ce qui concerne les principes clés ;
- la génération de ladite troisième structure de données représentant des propositions d'atténuation, pour chacune desdites réponses inadéquates, et l'envoi de la ou des propositions d'atténuation au client analyseur (2) ;
- la réception (270), de la part du client analyseur (2), d'une proposition d'atténuation sélectionnée parmi ladite ou lesdites propositions d'atténuation envoyées et d'un identifiant d'une personne responsable de ladite proposition d'atténuation sélectionnée ;
- l'envoi (280) d'une notification comprenant la proposition d'atténuation sélectionnée, pour chacune des actions d'atténuation sélectionnées, à un client (3, 4) de la personne responsable identifiée ; et
- la réception (290), de la part du client (3, 4) de la personne responsable identifiée, dudit message de validation d'atténuation lié à la proposition d'atténuation de la réponse inadéquate et la mise à jour de la valeur d'état du document en ce qui concerne les principes clés.

13. Programme informatique comprenant des instructions stockées dans une mémoire de données d'un dispositif informatique pour mettre en œuvre un procédé selon l'une quelconque des revendications 11 ou 12.
